# EUROPÄISCHE PATENTSCHRIFT

(11) **EP 3 963 246 B1**
(45) Veröffentlichungstag und Bekanntmachung des Hinweises auf die Patenterteilung: **08.03.2023**
(21) Anmeldenummer: 20722589.7
(22) Anmeldetag: 04.05.2020
(51) Int. Cl.: F16L 37/088, F16L 37/40, F16L 55/10

(54) **ABREISSKUPPLUNG MIT VERDREHSICHERUNG**
BREAKAWAY FITTING WITH ANTI-ROTATION FEATURE
COUPLEUR ARRACHABLE POURVU DE SÉCURITÉ ANTI-ROTATION

(30) Priorität: 03.05.2019 EP 19172437
(43) Veröffentlichungstag der Anmeldung: 09.03.2022
(73) Patentinhaber: ELAFLEX HIBY GmbH & Co. KG, 22525 Hamburg (DE)
(72) Erfinder: MEYER, Ulrich, 22589 Hamburg (DE)
(74) Vertreter: Glawe, Delfs, Moll
(86) Internationale Anmeldenummer: PCT/EP2020/062276
(87) Internationale Veröffentlichungsnummer: WO 2020/225192

(56) Entgegenhaltungen:
- EP-A1- 3 457 016
- WO-A1-2012/163910
- DE-A1-102005 011 601
- DE-U1-202010 009 871
- US-A- 3 719 194
- US-A- 5 018 546

## Beschreibung

Gegenstand der vorliegenden Erfindung ist eine Abreißkupplung zum Verbinden von Fluidleitungen. Die Abreißkupplung umfasst ein mit einer Fluidleitung verbindbares erstes Kupplungsteil und ein mit einer zweiten Fluidleitung verbindbares zweites Kupplungsteil. Die Kupplungsteile sind durch eine definierte Trennkraft voneinander trennbar. Zumindest eines der Kupplungsteile weist ein Auslaufschutzventil mit einem Ventilsitz und einem zum Zusammenwirken mit dem Ventilsitz ausgebildeten Dichtkörper auf. Das Auslaufschutzventil umfasst ein Aufhalteelement, welches dazu ausgebildet ist, im zusammengefügten Zustand der Kupplungsteile ein Durchleiten des Fluids zu ermöglichen. Das Auslaufschutzventil ist zudem dazu ausgebildet, im getrennten Zustand der Kupplungsteile ein Auslaufen des Fluids aus zumindest einer der Fluidleitungen zu verhindern. Die Abreißkupplung weist weiterhin eine Verdrehsicherung auf, welche im Betrieb der Kupplung ein Verdrehen von erstem Kupplungsteil und zweitem Kupplungsteil gegeneinander verhindert.

Solche Abreißkupplungen dienen dazu, zwei Fluidleitungen miteinander zu verbinden und gleichzeitig eine kontrollierte und definierte Trennung der Fluidleitungen voneinander zu ermöglichen in dem Fall, dass große Kräfte auf eine oder beide Fluidleitungen wirken. Die Abreißkupplung vermeidet dadurch eine Beschädigung der Fluidleitungen und ein damit einhergehendes unerwünschtes Austreten des Fluids. Abreißkupplungen werden beispielsweise verwendet, um einen Zapfschlauch mit einem Zapfventil zur Ausbringung eines Kraftstoffes zu verbinden.

Während des Betriebs einer Abreißkupplung werden von den mit der Abreißkupplung verbundenen Fluidleitungen regelmäßig Drehmomente auf die Kupplungsteile übertragen, welche zu einer Verdrehung des ersten Kupplungsteils relativ zum zweiten Kupplungsteil führen können. Die relative Verdrehung kann mit einem Reibungsabrieb im Bereich der für die trennbare Verbindung verantwortlichen Strukturelemente der Kupplungsteile einhergehen, welcher langfristig zu einer Beeinträchtigung der Funktionalität der Abreißkupplung führen kann. In der WO 2012/163910 A1 wurde daher vorgeschlagen, eine Verdrehsicherung vorzusehen, welche eine Verdrehung der beiden Kupplungsteile gegeneinander verhindert und so die Langzeithaltbarkeit deutlich erhöht. Allerdings hat sich gezeigt, dass sich im Langzeitbetrieb mit Verdrehsicherung negative Einflüsse auf das Auslaufschutzventil ergeben können.

Vor diesem Hintergrund ist es die Aufgabe der vorliegenden Erfindung eine Abreißkupplung bereit zu stellen, deren Zuverlässigkeit weiter erhöht ist. Gelöst wird diese Aufgabe mit den Merkmalen des unabhängigen Anspruchs. Vorteilhafte Ausführungsformen sind in den abhängigen Ansprüchen angegeben. Erfindungsgemäß weist der Ventilsitz eine Anlagefläche für den Dichtkörper auf, wobei im Bereich der Anlagefläche ein Ausgleichselement angeordnet ist, welches aus einem Material besteht, das eine geringere Härte aufweist als das Material des Ventilsitzes und/oder als das Material des Dichtkörpers. In einer bevorzugten Ausführungsform ist zudem vorgesehen, dass das Auslaufschutzventil eine spielbehaftete Führung für den Dichtkörper aufweist, die dazu ausgebildet ist, in der Schließstellung eine Winkelabweichung von zumindest 0,1° zwischen einer Axialrichtung des Ventilsitzes und einer Axialrichtung des Dichtkörpers zuzulassen.

Zunächst werden einige im Rahmen der Erfindung verwendete Begriffe erläutert.

Ein Auslaufschutzventil ist an zumindest einem der Kupplungsteile angeordnet, um ein Auslaufen des Fluids aus der jeweiligen Fluidleitung zu verhindern, welche mit diesem Kupplungsteil verbunden ist.

Um ein Auslaufen des Fluids zu verhindern, umfasst das Auslaufschutzventil einen Ventilsitz und einen Dichtkörper. Das Auslaufschutzventil wird im zusammengefügten Zustand der Kupplungsteile vom Aufhalteelement in einer Öffnungsstellung gehalten, in der üblicherweise der Dichtkörper vom Aufhalteelement gegen eine Schließkraft in der Öffnungsstellung gehalten wird. Bei einer Trennung der Kupplungsteile löst sich üblicherweise das Aufhaltelement vom Dichtkörper, so dass dieser durch die Schließkraft in die Schließstellung gebracht wird, in der er gegen den Ventilsitz gespannt wird. Das Auslaufschutzventil weist vorzugsweise eine Führung für den Dichtkörper auf, welche "spielbehaftet" ist. Dies bedeutet, dass die Axialrichtung des Dichtkörpers relativ zur Axialrichtung des Ventilsitzes nicht genau festgelegt ist, sondern innerhalb gewisser Grenzen variabel ist. Die Axialrichtungen von Dichtkörper bzw. Ventilsitz können durch die Symmetrieeigenschaften dieser Elemente festgelegt sein. Insbesondere ermöglicht die spielbehaftete Führung in der Schließstellung des Auslaufschutzventils eine Winkelabweichung zwischen den genannten Axialrichtungen von zumindest 0,1°. Vorzugsweise ermöglicht die Führung in der Schließstellung eine Winkelabweichung zwischen den Axialrichtungen von zumindest 0,2°, weiter vorzugsweise von zumindest 0,5°. Zudem ist es bevorzugt, wenn die Führung in der Schließstellung eine Winkelabweichung zwischen den Axialrichtungen von weniger als 5° ermöglicht. Eine solche Führung ist konstruktiv deutlich einfacher zu realisieren als eine spielfreie Führung, welche die Ausrichtung von Ventilsitz und Dichtkörper exakt festlegt. Zudem hat eine spielbehaftete Führung positive Auswirkungen auf die Trennungseigenschaften der Abreißkupplung.

Im Rahmen der Erfindung wurde erkannt, dass die Vermeidung der relativen Verdrehung der Kupplungsteile bei einer Abreißkupplung der eingangs genannten Art zwar einerseits zu dem oben beschriebenen Vorteil eines verminderten Abriebs führt, andererseits allerdings zumindest nach längerer Benutzungszeit auch mit dem Nachteil einhergehen kann, dass es zu negativen Einflüssen auf das Auslaufschutzventil kommen kann, beispielsweise zu Fehlstellungen des Dichtkörpers des Auslaufschutzventils relativ zum Ventilsitz. Dieser Nachteil steht in Verbindung mit dem Aufhalteelement der Abreißkupplung. Das Aufhalteelement dient dazu, das Auslaufschutzventil im verbundenen Zustand der Kupplungsteile offen zu halten, indem es beispielsweise auf den Dichtkörper drückt und diesen so gegen eine Schließkraft des Auslaufschutzventils in der Öffnungsstellung hält. Wenn die Abreißkupplung keine Verdrehsicherung aufweist, führt die regelmäßige Drehung der Kupplungsteile relativ zueinander dazu, dass das Aufhalteelement diese Drehung zumindest teilweise auf den Dichtkörper überträgt, so dass dieser relativ zum Dichtsitz bewegt wird. Dieser Bewegung wurde im Stand der Technik bisher keine Beachtung geschenkt.

Zwar waren aus den Dokumenten US 2019 0086014 A1 oder US 5,018,546 Abreißkupplungen mit Verdrehsicherungen bekannt, bei denen im Bereich der Anlagefläche des Ventilsitzes ein Dichtungselement angeordnet ist. Allerdings weisen die Abreißkupplungen bei diesem Stand der Technik Auslaufschutzventile mit einer spielfreien Führung für die Dichtkörper auf. Dies bedeutet, dass das Problem von Schiefstellungen der Dichtkörper relativ zum Ventilsitz bei diesem Stand der Technik gar nicht auftreten kann, da die spielfreie Führung solche Schiefstellungen verhindert.

Erst im Rahmen der Erfindung wurde erkannt, dass bei Auslaufschutzventilen mit einer spielbehafteten Führung für den Dichtekörper die vom Aufhaltelement auf den Dichtkörper übertragene relative Bewegung wichtig ist, um eine ordnungsgemäße Ausrichtung des Dichtkörpers relativ zum Dichtsitz auch über lange Benutzungszeiträume zu gewährleisten. Wird diese relative Bewegung durch die Verdrehsicherung verhindert, kann es daher im Laufe der Zeit zu geringen Schiefstellungen des Dichtkörpers kommen. Dieser Nachteil einer Verdrehsicherung war allerdings nicht ohne Weiteres ersichtlich, da er erst nach langer Benutzungszeit zu Tage treten kann, nach der sich beispielsweise durch Stöße oder andere Umwelteinwirkungen eine Schiefstellung langsam aufbauen konnte, ohne durch eine regelmäßige Verdrehung der Kupplungsteile wieder ausgeglichen zu werden.

Vor diesem Hintergrund wurde im Rahmen der vorliegenden Erfindung erkannt, dass es bei einer Abreißkupplung mit Verdrehsicherung zum Ausgleich der geringfügigen Schiefstellungen ausreichend ist, im Bereich der Anlagefläche zwischen Dichtkörper und Ventilsitz des Auslaufschutzventils ein Ausgleichselement anzuordnen, welches aus einem Material besteht, das eine geringere Härte aufweist als das Material des Ventilsitzes bzw. als das Material des Dichtkörpers. Das weichere Material des Ausgleichselements erlaubt es dem Dichtkörper trotz einer möglichen leichten Schiefstellung relativ zur Längsachse des Auslaufschutzventils, welche sich im Laufe der Zeit aufgebaut hat, bei einer Trennung der Kupplungsteile dichtend auf dem Ventilsitz zur Anlage zu kommen, indem das Ausgleichselement eine lokal stärkere Verformung zulässt und die Schiefstellung so ausgleicht. Das Vorsehen eines solchen Ausgleichselements war im Stand der Technik bisher völlig unüblich, da der Herstellungsprozess durch das Einbringen des zusätzlichen Materials geringerer Härte aufwändiger und kostenintensiver wird.

Bevorzugt ist das Ausgleichselement zwischen dem Ventilsitz und dem Dichtkörper so angeordnet, dass das Ausgleichselement im Bereich der Anlagefläche einen unmittelbaren Kontakt zwischen dem Ventilsitz und dem Dichtkörper verhindert. Die positive Wirkung dieser Ausgestaltung beruht auf der Erkenntnis, dass ein verbleibender Kontakt im Bereich der Anlagefläche zwischen dem Material des Dichtkörpers und dem Material des Ventilsitzes bei einer Schiefstellung des Dichtkörpers zu einer Undichtigkeit führen kann, welche nicht vom Ausgleichselement behoben wird. Wird ein solcher Kontakt vermieden, kann hingegen die Ausgleichswirkung des Ausgleichselements vollständig ausgenutzt werden.

In einer bevorzugten Ausführungsform weist das Material des Ausgleichselements eine geringere Härte auf als das Material des Ventilsitzes und als das Material des Dichtkörpers. In diesem Fall kann sowohl der Dichtkörper als auch der Ventilsitz bei einer Schiefstellung des Dichtkörpers eine Verformung des Ausgleichselements bewirken, durch die die Schiefstellung ausgeglichen wird.

In einer bevorzugten Ausführungsform ist das Ausgleichselement reibschlüssig und/oder formschlüssig am Ventilsitz oder am Dichtkörper befestigt. Es kann insbesondere formschlüssig in den Ventilsitz eingelassen sein oder auch reib- und / oder formschlüssig um den Dichtkörper herum gelegt sein. Dazu kann der Dichtkörper oder der Ventilsitz eine in Umfangsrichtung umlaufende Nut aufweisen, in die das Ausgleichselement eingesetzt ist, wobei der Dichtkörper oder der Ventilsitz vorzugweise elastisch ausgebildet sind, so dass eine Klemmwirkung auf das in die Nut eingesetzte Ausgleichselement ausübt wird. Alternativ kann das Ausgleichselement stoffschlüssig mit dem Ventilsitz oder mit dem Dichtkörper verbunden sein. Beispielsweise kann vorgesehen sein, dass das Ausgleichselement auf das Material des Ventilsitzes oder des Dichtkörpers aufgespritzt oder aufgeklebt wird. Alternativ kann auch vorgesehen sein, dass der Ventilsitz bzw. der Dichtkörper mit einem stoffschlüssig verbundenen Ausgleichselement im Zwei-Komponenten-Spritzgussverfahren hergestellt wird.

Das Material des Ausgleichselements weist vorzugsweise eine Härte auf, welche im Bereich zwischen 25 und 100 Shore-A liegt, vorzugsweise im Bereich zwischen, 70 und 95 Shore-A und weiter vorzugsweise im Bereich zwischen 75 und 90 Shore-A, jeweils vorzugsweise bestimmt nach DIN ISO 7619-1. Der Ventilsitz und/oder der Dichtkörper kann aus metallischem Werkstoff, Kunststoff oder auch aus anderen Werkstoffen hergestellt sein, und weist eine größere Härte auf als das Ausgleichselement. Beispielsweise kann der Ventilsitz und/oder der Dichtkörper eines der nachfolgend genannten Materialien aufweisen bzw. daraus gebildet sein: eine Aluminiumlegierung, vorzugsweise mit einer Härte zwischen 50 HB und 160 HB (Brinellhärte ermittelt vorzugsweise nach DIN EN 754-2 / 755-2, härtbar / nicht härtbar), einen härtbaren Stahl, vorzugsweise mit einer Härte zwischen 40 HRC und 64 HRC (Rockwellhärte, ermittelt vorzugsweise nach DIN EN 10083), einen Edelstahl, vorzugsweise mit einer Härte zwischen 200 HB und 250 HB (Brinellhärte ermittelt vorzugsweise nach DIN EN 10088), einen nichtlegierten Stahl, vorzugsweise mit einer Härte zwischen 100 HB und 120 HB (Brinellhärte ermittelt vorzugsweise nach DIN EN 10025), einen Kunststoff, vorzugsweise mit einer Härte zwischen 46 Shore-D und 100 Shore-D (ermittelt vorzugsweise nach DIN ISO 7619-1), und/oder eine Keramik, vorzugsweise mit einer Härte zwischen 900 HV10 und 2500 HV10 (Vickershärte). Es hat sich gezeigt, dass durch die oben genannten Härte-Bereiche ein besonders guter Ausgleich von Schiefstellungen ermöglicht wird, wobei gleichzeitig Abnutzung und Verschleiß von Dichtsitz, Dichtkörper und Ausgleichselement gering gehalten werden.

In einer bevorzugten Ausführungsform weist das Ausgleichselement einen Kunststoff und insbesondere ein Elastomer auf oder ist daraus gebildet. Weiterhin weist vorzugsweise der Dichtkörper und / oder der Ventilsitz ein Metall, einen Kunststoff oder einen keramischen Werkstoff auf oder ist daraus gebildet. Diese Materialwahl hat sich als vorteilhaft erwiesen, um Schrägstellungen des Dichtkörpers effektiv ausgleichen zu können und gleichzeitig einen langfristigen zuverlässigen Betrieb der Abreißkupplung zu gewährleisten.

Aufgrund des erfindungsgemäßen Ausgleichselement ist es möglich, das Material des Dichtkörpers und/oder des Ventilsitzes im Bereich der Anlagefläche mit einer größeren mittleren Rautiefe auszugestalten, als dies im Stand der Technik üblich war. Die Herstellung von Dichtkörper bzw. Ventilsitz wird dadurch vereinfacht. In einer bevorzugten Ausführungsform weisen der Dichtkörper und/oder der Ventilsitz im Bereich der Anlagefläche eine gemittelte Rautiefe R_{z} nach DIN EN ISO 4287:1984 auf, welche zwischen 1 µm und 63 µm, vorzugsweise zwischen 4 µm und 25 µm, weiter vorzugsweise zwischen 4 µm und 10 µm liegt.

Das Auslaufschutzventil kann am ersten Kupplungsteil angeordnet sein, wobei das Aufhalteelement im zusammengefügten Zustand der Kupplungsteile gegen eine Anlagefläche des zweiten Kupplungsteils anliegt und den Ventilköper des Auslaufschutzventils gegen eine Schließkraft in einer Öffnungsstellung hält.

Die Verdrehsicherung weist erfindungsgemäß ein Sicherungselement auf, welches zwischen dem ersten und dem zweiten Kupplungsteil angeordnet ist. Das Sicherungselement weist vorzugsweise einen nicht-rotationssymmetrischen Sicherungsring auf, welcher einen Formschluss mit erstem und zweitem Kupplungsteil bildet. Durch diese Ausgestaltung
kann die Verdrehsicherung auf einfache und effektive Weise realisiert werden. Weiterhin kann die Abreißkupplung einen Rastring aufweisen, der in eine erste

Rastringaufnahme des ersten Kupplungsteils und eine zweite Rastringaufnahme des zweiten Kupplungsteils eingreift und durch die definierte Trennkraft aus den Rastringaufnahmen ausrastbar ist.

Die Kupplungsteile der Abreißkupplung können dazu ausgebildet sein, um zumindest ein weiteres Paar von Fluidleitungen miteinander zu verbinden, beispielsweise können die erste und zweite Fluidleitung zur Zuführung eines ersten Fluids und das weitere Paar von Fluidleitungen zur Rückführung eines zweiten Fluids ausgebildet sein. Die Kupplungsteile können dazu mit dem zumindest einem weiteren Paar von Fluidleitungen verbindbar sein, wobei die Kupplungsteile zumindest ein weiteres Auslaufschutzventil aufweisen, das dem weiteren Paar von Fluidleitungen zugeordnet ist und das einen Ventilsitz und einen zum Zusammenwirken mit dem Ventilsitz ausgebildeten Dichtkörper aufweist, wobei das weitere Auslaufschutzventil ein Aufhalteelement umfasst, das dazu ausgebildet ist, im zusammengefügten Zustand der Kupplungsteile ein Durchleiten des Fluids zu ermöglichen, wobei das weitere Auslaufschutzventil dazu ausgebildet ist, im getrennten Zustand der Kupplungsteile ein Auslaufen des Fluids aus zumindest einer der weiteren Fluidleitungen zu verhindern. Das weitere Auslaufschutzventil kann im Übrigen auf erfindungsgemäße Weise wie vorstehend bereits beschrieben ausgebildet sein. Zudem kann auch vorgesehen sein, dass an beiden Kupplungsteilen jeweils erfindungsgemäß ausgebildete Auslaufschutzventile angeordnet sind, so dass das Auslaufen des Fluids aus beiden Fluidleitungen verhindert wird.

Die Erfindung wird nachfolgend anhand von bevorzugten Ausführungsformen unter Bezugnahme auf die beigefügten Zeichnungen beispielhaft erläutert. Es zeigen:
- Figur 1:: eine erste Ausführungsform einer erfindungsgemäßen Abreißkupplung in einer seitlichen Längsschnittdarstellung im zusammengefügten Zustand der Kupplungsteile;
- Figur 2:: eine seitliche Längsschnittdarstellung der Ausführungsform der Figur 1 nach Trennung der Kupplungsteile;
- Figur 3:: eine seitliche Querschnittsansicht eines alternativen Dichtkörpers, welcher bei einer weiteren Ausführungsform einer erfindungsgemäßen Abreißkupplung zum Einsatz kommen kann.

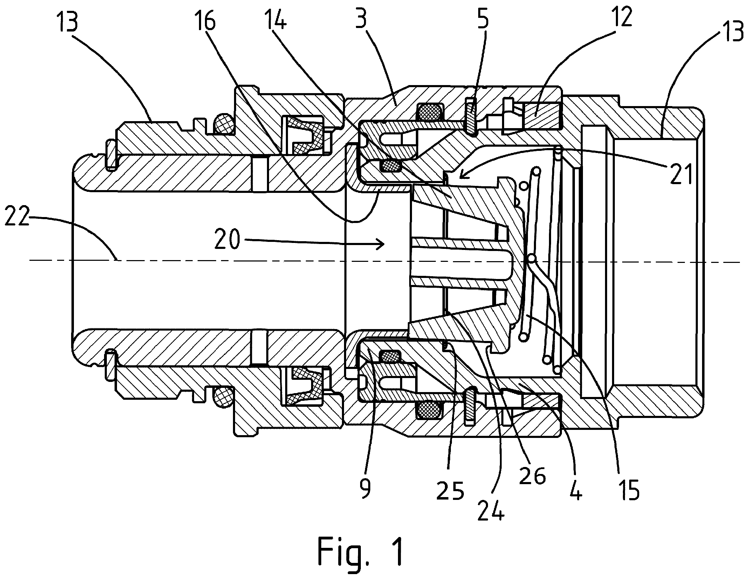

Figur 1 zeigt eine erfindungsgemäße Abreißkupplung in einer Längsschnittansicht. Die Abreißkupplung umfasst ein erstes Kupplungsteil 3 und ein zweites Kupplungsteil 4. Die Kupplungsteile befinden sich in Figur 1 in einem zusammengefügten Zustand. Das zweite Kupplungsteil 4, welches vorliegend als Male-Kupplungsteil ausgebildet ist, greift in diesem Zustand in das erste Kupplungsteil 3 ein, welches als Female-Kupplungsteil ausgebildet ist. Die Kupplungsteile 3, 4 weisen jeweils einen Fluidanschluss 13 zur Verbindung mit einer Fluidleitung auf (nicht gezeigt).

Die beiden Kupplungsteile 3, 4 werden mit Hilfe eines Rastrings 5 aneinander befestigt, welcher in eine an einer Innenfläche des ersten Kupplungsteils 3 angeordneten Rastringaufnahme sowie in eine an einer Außenfläche des zweiten Kupplungsteils 4 angeordneten weiteren Rastringaufnahme eingreift.

Zwischen den Kupplungsteilen 3, 4 ist ein nicht-rotationssymmetrischer Sicherungsring 12 angeordnet, welcher formschlüssig mit beiden Kupplungsteilen 3, 4 zusammenwirkt und auf diese Weise eine relative Verdrehung der beiden Kupplungsteile 3, 4 gegeneinander verhindert.

Die Abreißkupplung weist weiterhin ein in einem Endbereich 9 des zweiten Kupplungsteils 4 angeordnetes Auslaufschutzventil 20 auf. Das Auslaufschutzventil 20 umfasst einen Dichtkörper 14 und einen Ventilsitz 21. Der Dichtkörper 14 ist mit einer Rückstellfeder 15 verbunden, welche auf den Dichtkörper 14 eine Schließkraft ausübt und diesen so in Richtung einer Schließstellung drängt. In dem in Figur 1 gezeigten zusammengefügten Zustand der Kupplungsteile 3, 4 wird der Dichtkörper 14 allerdings durch ein Aufhalteelement 16 in einer Öffnungsstellung gehalten. Eine zum zweiten Kupplungsteil 4 weisende Frontfläche des Aufhalteelements 16 drückt in diesem Zustand gegen eine Gegenfläche des Dichtkörpers 14 und hält diesen so entgegen der Schließkraft in der Öffnungsstellung. In dieser Stellung kann das Fluid durch einen im Inneren der Kupplungsteile 3, 4 gebildeten Kanal hindurchfließen.

Der Ventilsitz 21 weist eine Anlagefläche 24 für eine Dichtfläche 26 des Dichtkörpers 14 auf. Im Bereich der Anlagefläche 24 befindet sich ein konzentrisch zu einer Längsachse 22 des Ventilsitzes angeordnetes Ausgleichselement 25, welches stoffschlüssig mit der Anlagefläche 24 des Ventilsitzes 21 verbunden ist. Das Ausgleichselement 25 ist aus Acrylnitril-Butadien-Kautschuk (NBR) hergestellt und weist eine Härte von 85 Shore-A auf. Der Ventilsitz 21 ist aus Aluminium und der Dichtkörper 14 sowie dessen Dichtfläche 26 aus Kunststoff hergestellt. Ventilsitz 21 und Dichtkörper 14 weisen eine deutlich größere Härte als das Ausgleichselement auf. Die gemittelte Rautiefe R_{z} nach DIN EN ISO 4287:1984 des Materials des Dichtkörpers 14 beträgt vorliegend 4 µm. Durch das Ausgleichselement 25 wird im Bereich der Anlagefläche 24 ein unmittelbarer Kontakt zwischen dem Material des Dichtkörpers 14 und dem Material des Ventilsitzes 21 vermieden.

Weiterhin wird durch die innere Wandfläche der Abreißkupplung stromabwärts des Ventilsitzes 21 eine Führung für den Dichtkörper 14 gebildet, entlang derer der Dichtkörper 14 bewegbar ist. Diese Führung ermöglicht eine Winkelabweichung von mehr als 0,1° zwischen einer Axialrichtung des Dichtkörpers 14 und der Längsachse 22 des Ventilsitzes 21.

Bei gewöhnlichen Abreißkupplungen ohne Verdrehsicherung (nicht gezeigt) kommt es regelmäßig zu einer Drehung der Kupplungsteile 3, 4 relativ zueinander. Dabei wird der am Aufhalteelement 16 anliegende Dichtkörper 14 regelmäßig in Bewegung versetzt, was zu einer optimalen Ausrichtung des Dichtkörpers relativ zum Dichtsitz führt. Da vorliegend allerdings eine Verdrehsicherung zum Einsatz kommt, kann es im Laufe der Zeit durch Umwelteinwirkungen wie z.B. durch Stöße oder durch nicht-symmetrischen Verschleiß zu einer Schiefstellung des Dichtkörpers 14 relativ zum Dichtsitz 21 kommen. Diese Schiefstellung ist in Figur 1 zu Illustrationszwecken auf übertriebene Weise dargestellt.

Bei Wirken einer großen Trennkraft auf eines der Kupplungsteile rastet der Rastring 5 aus der Rastringaufnahme des ersten und/oder zweiten Kupplungsteils aus und ermöglicht so eine kontrollierte und definierte Trennung beiden Kupplungsteile 3, 4 voneinander.

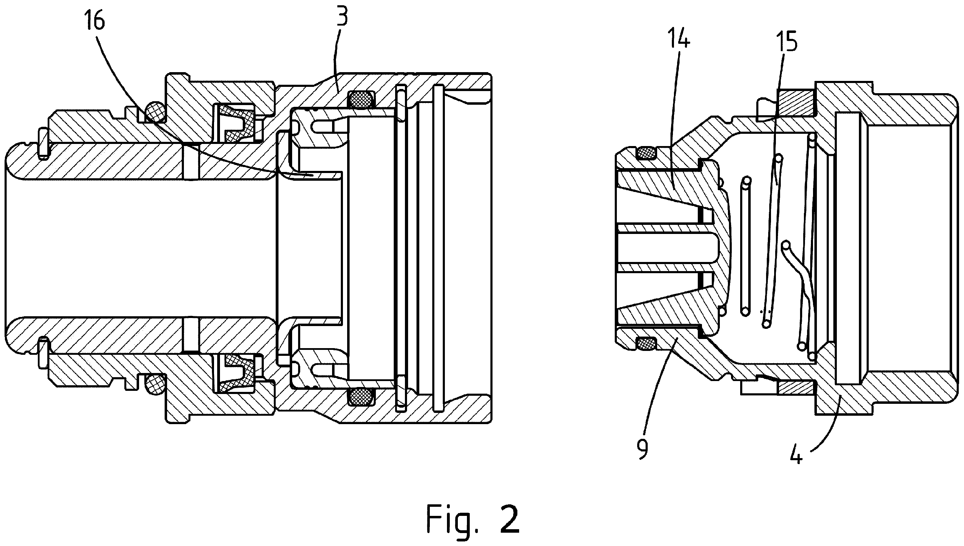

In Figur 2 ist die Ausführungsform der Figur 1 in einem getrennten Zustand der Kupplungsteile gezeigt. Unmittelbar während des Trennereignisses entfernt sich die Frontfläche des Aufhalteelements 16 von der Gegenfläche des Dichtkörpers 14, so dass der Dichtkörper 14 durch die von der Rückstellfeder 15 ausgeübte Schließkraft in die Schließstellung bewegt wird. Dadurch kommt eine Dichtfläche 26 des Dichtkörpers 14 auf dem Ausgleichselement 25 zum Liegen und der Fluidkanal des zweiten Kupplungsteils 4 wird dadurch verschlossen.

Die oben beschriebene Schiefstellung des Dichtkörpers 14 relativ zur Längsachse 22 kann allerdings dazu führen, dass die Dichtfläche 26 nicht optimal auf dem Ventilsitz 21 aufliegt. Aufgrund der Schiefstellung des Dichtkörpers 14 ragt ein Umfangsabschnitt der Dichtfläche 26 in Längsrichtung weiter vor als ein in Umfangsrichtung gegenüberliegender Umfangsabschnitt. Der in Längsrichtung weiter hervortretende Umfangsabschnitt trifft somit zuerst auf der Anlagefläche 24 auf. Aufgrund des dort angeordneten Ausgleichselements 25 kann jedoch das weiche Material des Ausgleichselements an dieser Stelle verformt werden, so dass die Schiefstellung ausgeglichen wird und es trotz Schiefstellung zu einem dichtenden Abschluss zwischen der Dichtfläche 26 des Dichtkörpers 14 und der Anlagefläche 24 des Ventilsitzes 21 kommt.

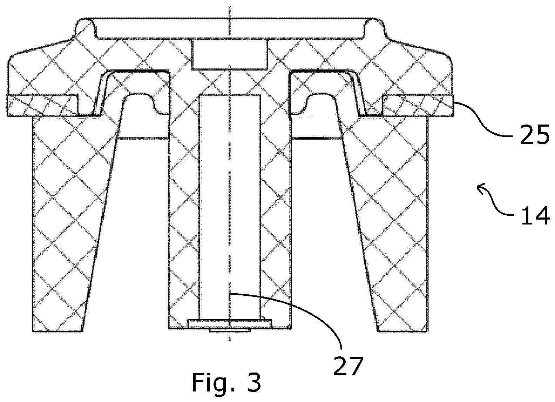

Figur 3 zeigt eine seitliche Schnittansicht eines Dichtkörpers 14 einer alternativen Ausführungsform einer erfindungsgemäßen Abreißkupplung. In dieser alternativen Ausführungsform ist das Ausgleichselement 25 nicht am Ventilsitz 21, sondern, wie in Figur 3 gezeigt, am Dichtkörper 14 angeordnet. Dazu weist der Dichtkörper eine in Umfangsrichtung umlaufende Nut auf, in die das Ausgleichselement eingesetzt ist. Außerdem ist in Figur 3 die Axialrichtung 27 des Dichtkörpers 14 illustriert. Im Übrigen ist die alternative Ausführungsform mit der Ausführungsform der Figuren 1 und 2 identisch.

## Patentansprüche

1. Abreißkupplung zum Verbinden zweier Fluidleitungen, umfassend ein mit der ersten Fluidleitung verbindbares erstes Kupplungsteil (3) und ein mit der zweiten Fluidleitung verbindbares zweites Kupplungsteil (4), mit den nachfolgenden Merkmalen:
a. die Kupplungsteile (3, 4) sind durch eine definierte Trennkraft voneinander trennbar;
b. zumindest eines der Kupplungsteile (3, 4) weist ein Auslaufschutzventil (20) mit einem Ventilsitz (21) und einem zum Zusammenwirken mit dem Ventilsitz (21) ausgebildeten Dichtkörper (14) auf,
c. das Auslaufschutzventil (20) weist ein Aufhalteelement (16) auf, welches dazu ausgebildet ist, im zusammengefügten Zustand der Kupplungsteile (3, 4) ein Durchleiten des Fluids zu ermöglichen,
d. das Auslaufschutzventil (20) ist dazu ausgebildet, im getrennten Zustand der Kupplungsteile (3, 4) ein Auslaufen des Fluids aus zumindest einer der Fluidleitungen zu verhindern,
e. die Abreißkupplung weist weiterhin eine Verdrehsicherung auf, welche im Betrieb der Kupplung ein Verdrehen von erstem Kupplungsteil (3) und zweitem Kupplungsteil (4) gegeneinander verhindert, wobei die Verdrehsicherung ein Sicherungselement (12) aufweist, welches zwischen dem ersten (3) und dem zweiten Kupplungsteil (4) angeordnet ist,
f. der Ventilsitz (21) weist eine Anlagefläche (24) für den Dichtkörper (14) auf,
**gekennzeichnet durch** die weiteren Merkmale:
g. im Bereich der Anlagefläche (24) ist ein Ausgleichselement (25) angeordnet, welches aus einem Material besteht, das eine geringere Härte aufweist als das Material des Ventilsitzes (21) und/oder als das Material des Dichtkörpers (14).

2. Abreißkupplung gemäß Anspruch 1, bei der das Ausgleichselement zwischen dem Ventilsitz (21) und dem Dichtkörper (14) so angeordnet ist, dass es im Bereich der Anlagefläche (24) einen unmittelbaren Kontakt zwischen dem Ventilsitz (21) und dem Dichtkörper (14) verhindert.

3. Abreißkupplung gemäß Anspruch 1 oder 2, bei der der Dichtkörper (14) und der Ventilsitz (21) dazu ausgebildet sind, relativ zueinander eine Schiefstellung einzunehmen, wobei das Ausgleichselement (25) vorzugsweise dazu eingerichtet ist, die Schiefstellung zwischen dem Dichtkörper (14) und dem Ventilsitz (21) in einer Schließstellung des Auslaufschutzventils durch eine lokal stärkere Verformung auszugleichen.

4. Abreißkupplung gemäß einem der Ansprüche 1 bis 3, bei der das Material des Ausgleichselements (25) eine geringere Härte Aufweist als das Material des Ventilsitzes (21) und als das Material des Dichtkörpers (14).

5. Abreißkupplung gemäß einem der Ansprüche 1 bis 4, bei der das Ausgleichselement (25) mit dem Dichtkörper (14) verbunden ist, wobei die Verbindung vorzugsweise reibschlüssig oder formschlüssig oder stoffschlüssig erfolgt.

6. Abreißkupplung gemäß Anspruch 5, bei der der Dichtkörper (14) eine in Umfangsrichtung umlaufende Nut aufweist, in die das Ausgleichselement (25) eingesetzt ist, wobei der Dichtkörper (14) vorzugweise elastisch ausgebildet ist, so dass eine Klemmwirkung auf das in die Nut eingesetzte Ausgleichselement (25) ausübt wird.

7. Abreißkupplung gemäß einem der Ansprüche 1 bis 4, bei der das Ausgleichselement (25) mit dem Ventilsitz (21) verbunden ist, wobei die Verbindung vorzugweise reibschlüssig oder formschlüssig oder stoffschlüssig erfolgt, wobei der Ventilsitz (21) vorzugsweise eine in Umfangsrichtung umlaufende Nut aufweist, in die das Ausgleichselement (25) eingesetzt ist, wobei der Ventilsitz (21) weiter vorzugweise elastisch ausgebildet ist, so dass eine Klemmwirkung auf das in die Nut eingesetzte Ausgleichselement (25) ausübt wird.

8. Abreißkupplung gemäß einem der Ansprüche 1 bis 7, bei der das Ausgleichselement (25) aus einem Material besteht, dessen Härte im Bereich zwischen 25 und 100 Shore-A liegt, vorzugsweise im Bereich zwischen 70 und 95 Shore-A und weiter vorzugsweise im Bereich zwischen 75 und 90 Shore-A.

9. Abreißkupplung gemäß einem der Ansprüche 1 bis 8, bei der das Ausgleichselement (25) einen Kunststoff, insbesondere ein Elastomer aufweist oder daraus gebildet ist.

10. Abreißkupplung gemäß einem der Ansprüche 1 bis 9, bei der der Dichtkörper (14) und / oder der Ventilsitz (21) einen Kunststoff oder ein Metall aufweist oder daraus gebildet ist.

11. Abreißkupplung gemäß einem der Ansprüche 1 bis 10, bei der der Dichtkörper (14) und/oder der Ventilsitz (21) im Bereich der Anlagefläche (24) eine gemittelte Rautiefe R_{z} nach DIN EN ISO 4287:1984 aufweisen, welche zwischen 1 µm und 63 µm, vorzugsweise zwischen 4 µm und 25 µm, weiter vorzugsweise zwischen 4 µm und 10 µm liegt.

12. Abreißkupplung gemäß einem der Ansprüche 1 bis 11, bei der
a. das Auslaufschutzventil (20) am zweiten Kupplungsteil (4) angeordnet ist, wobei das Aufhalteelement (16) im zusammengefügten Zustand der Kupplungsteile (3, 4) gegen eine Anlagefläche des ersten Kupplungsteils (3) anliegt und den Ventilköper (14) des Auslaufschutzventils (20) gegen eine Schließkraft in einer Öffnungsstellung hält und/oder
b. das Auslaufschutzventil (20) eine spielbehaftete Führung für den Dichtkörper (14) aufweist, die dazu ausgebildet ist, in der Schließstellung eine Winkelabweichung von zumindest 0,1° zwischen einer Axialrichtung des Ventilsitzes (21) und einer Axialrichtung des Dichtkörpers (14) zuzulassen.

13. Abreißkupplung gemäß einem der Ansprüche 1 bis 12, bei der das Sicherungselement (12) einen nicht-rotationssymmetrischen Sicherungsring aufweist, welcher einen Formschluss mit erstem (3) und zweitem Kupplungsteil (4) bildet.

14. Abreißkupplung gemäß einem der Ansprüche 1 bis 13, welche einen Rastring (5) aufweist, der in eine erste Rastringaufnahme des ersten Kupplungsteils (3) und eine zweite Rastringaufnahme des zweiten Kupplungsteils (4) eingreift und durch eine definierte Trennkraft ausrastbar ist.

15. Abreißkupplung gemäß einem der Ansprüche 1 bis 14, bei der die Kupplungsteile (3, 4) mit zumindest einem weiteren Paar von Fluidleitungen verbindbar sind, wobei die Kupplungsteile (3, 4) zumindest ein weiteres Auslaufschutzventil aufweisen, das dem weiteren Paar von Fluidleitungen zugeordnet ist und das einen Ventilsitz (21) und einen zum Zusammenwirken mit dem Ventilsitz (21) ausgebildeten Dichtkörper (14) aufweist, wobei das weitere Auslaufschutzventil (20) ein Aufhalteelement (16) umfasst, das dazu ausgebildet ist, im zusammengefügten Zustand der Kupplungsteile (3, 4) ein Durchleiten des Fluids zu ermöglichen, wobei das weitere Auslaufschutzventil (20) dazu ausgebildet ist, im getrennten Zustand der Kupplungsteile (3, 4) ein Auslaufen des Fluids aus zumindest einer der weiteren Fluidleitungen zu verhindern.

## Claims

1. Breakaway coupling for connecting two fluid lines, comprising a first coupling part (3), which can be connected to the first fluid line, and a second coupling part (4), which can be connected to the second fluid line, the coupling having the following features:
a. the coupling parts (3, 4) can be separated from one another by a defined separating force;
b. at least one of the coupling parts (3, 4) has an outflow-prevention valve (20) with a valve seat (21) and a sealing body (14), which is designed to interact with the valve seat (21),
c. the outflow-prevention valve (20) has a hold-open element (16), which is designed so that, in the joined-together state of the coupling parts (3, 4), it allows the fluid to pass through,
d. the outflow-prevention valve (20) is designed so that, in the separated state of the coupling parts (3, 4), it prevents outflow of the fluid from at least one of the fluid lines,
e. the breakaway coupling also has an anti-rotation safeguard, which, when the coupling is in operation, prevents the first coupling part (3) and second coupling part (4) from rotating in relation to one another, wherein the anti-rotation safeguard has a securing element (12), which is arranged between the first coupling part (3) and the second coupling part (4),
f. the valve seat (21) has an abutment surface (24) for the sealing body (14),
**characterized by** the further features:
g. arranged in the region of the abutment surface (24) is a compensating element (25), which consists of a material which has a lower-level hardness than the material of the valve seat (21) and/or than the material of the sealing body (14) .

2. Breakaway coupling according to Claim 1, in which the compensating element is arranged between the valve seat (21) and the sealing body (14) such that, in the region of the abutment surface (24), it prevents direct contact between the valve seat (21) and the sealing body (14).

3. Breakaway coupling according to Claim 1 or 2, in which the sealing body (14) and the valve seat (21) are designed to assume a tilted position relative to one another, wherein the compensating element (25) is preferably intended to compensate for the tilted position between the sealing body (14) and the valve seat (21) in a closed position of the outflow-prevention valve by way of a locally relatively pronounced deformation.

4. Breakaway coupling according to one of Claims 1 to 3, in which the material of the compensating element (25) has a lower-level hardness than the material of the valve seat (21) and than the material of the sealing body (14).

5. Breakaway coupling according to one of Claims 1 to 4, in which the compensating element (25) is connected to the sealing body (14), wherein the connection is preferably established by a friction fit or form fit or by cohesive bonding.

6. Breakaway coupling according to Claim 5, in which the sealing body (14) has a circumferentially encircling groove, into which the compensating element (25) is inserted, wherein the sealing body (14) is preferably of an elastic design, so that the compensating element (25) inserted into the groove is subjected to a clamping action.

7. Breakaway coupling according to one of Claims 1 to 4, in which the compensating element (25) is connected to the valve seat (21), wherein the connection is preferably established by a friction fit or form fit or by cohesive bonding, wherein the valve seat (21) preferably has a circumferentially encircling groove, into which the compensating element (25) is inserted, wherein the valve seat (21) is also preferably of elastic design, so that the compensating element (25) inserted into the groove is subjected to a clamping action.

8. Breakaway coupling according to one of Claims 1 to 7, in which the compensating element (25) consists of a material of which the hardness ranges between 25 and 100 Shore A, preferably ranges between 70 and 95 Shore A and further preferably ranges between 75 and 90 Shore A.

9. Breakaway coupling according to one of Claims 1 to 8, in which the compensating element (25) comprises a plastics material, in particular an elastomer, or is formed therefrom.

10. Breakaway coupling according to one of Claims 1 to 9, in which the sealing body (14) and/or the valve seat (21) comprise/comprises a plastics material or a metal or are/is formed therefrom.

11. Breakaway coupling according to one of Claims 1 to 10, in which, in the region of the abutment surface (24), the sealing body (14) and/or the valve seat (21) have/has an average surface roughness R_{z}, in accordance with DIN EN ISO 4287:1984, which is between 1 µm and 63 µm, preferably between 4 µm and 25 µm, further preferably between 4 µm and 10 µm.

12. Breakaway coupling according to one of Claims 1 to 11, in which
a. the outflow-prevention valve (20) is arranged on the second coupling part (4), wherein, in the joined-together state of the coupling parts (3, 4), the hold-open element (16) butts against an abutment surface of the first coupling part (3) and holds the valve body (14) of the outflow-prevention valve (20), counter to a closing force, in an open position and/or
b. the outflow-prevention valve (20) has a guide, with play, for the sealing body (14), the guide being designed so that, in the closed position, it allows an angle deviation of at least 0.1° between an axial direction of the valve seat (21) and an axial direction of the sealing body (14).

13. Breakaway coupling according to one of Claims 1 to 12, in which the securing element (12) has a securing ring which is not rotationally symmetrical and creates a form fit with the first coupling part (3) and second coupling part (4).

14. Breakaway coupling according to one of Claims 1 to 13, which has a latching ring (5) which engages in a first latching-ring mount of the first coupling part (3) and a second latching-ring mount of the second coupling part (4) and can be unlatched by a defined separating force.

15. Breakaway coupling according to one of Claims 1 to 14, in which the coupling parts (3, 4) can be connected to at least one further pair of fluid lines, wherein the coupling parts (3, 4) have at least one further outflow-prevention valve, which is assigned to the further pair of fluid lines and has a valve seat (21) and a sealing body (14), which is designed to interact with the valve seat (21), wherein the further outflow-prevention valve (20) comprises a hold-open element (16), which is designed so that, in the joined-together state of the coupling parts (3, 4), it allows the fluid to pass through, wherein the further outflow-prevention valve (20) is designed so that, in the separated state of the coupling parts (3, 4), it prevents outflow of the fluid from at least one of the further fluid lines.

## Revendications

1. Raccord arrachable pour relier deux conduites de fluide, comprenant une première partie de raccord (3) pouvant être reliée à la première conduite de fluide et une deuxième partie de raccord (4) pouvant être reliée à la deuxième conduite de fluide, avec les caractéristiques suivantes :
a. les parties de raccord (3, 4) peuvent être séparées l'une de l'autre par une force de séparation définie ;
b. au moins l'une des parties de raccord (3, 4) présente une soupape de protection contre les fuites (20) avec un siège de soupape (21) et un corps d'étanchéité (14) réalisé pour coopérer avec le siège de soupape (21),
c. la soupape de protection contre les fuites (20) présente un élément de retenue (16) qui est réalisé pour permettre un passage du fluide à l'état assemblé des parties de raccord (3, 4),
d. la soupape de protection contre les fuites (20) est réalisée pour empêcher une fuite du fluide à partir d'au moins une des conduites de fluide à l'état séparé des parties de raccord (3, 4),
e. le raccord arrachable présente en outre un dispositif anti-rotation qui empêche la première partie de raccord (3) et la deuxième partie de raccord (4) de tourner l'une par rapport à l'autre pendant le fonctionnement du raccord, le dispositif anti-rotation présentant un élément de sécurité (12) qui est agencé entre la première (3) et la deuxième partie de raccord (4),
f. le siège de soupape (21) présente une surface d'appui (24) pour le corps d'étanchéité (14), **caractérisé par** les autres caractéristiques suivantes :
g. dans la zone de la surface d'appui (24) est agencé un élément de compensation (25) qui est constitué d'un matériau qui présente une dureté inférieure à celle du matériau du siège de soupape (21) et/ou à celle du matériau du corps d'étanchéité (14).

2. Raccord arrachable selon la revendication 1, dans lequel l'élément de compensation est agencé entre le siège de soupape (21) et le corps d'étanchéité (14) de telle sorte qu'il empêche un contact direct entre le siège de soupape (21) et le corps d'étanchéité (14) dans la zone de la surface d'appui (24).

3. Raccord arrachable selon la revendication 1 ou 2, dans lequel le corps d'étanchéité (14) et le siège de soupape (21) sont réalisés pour prendre une position inclinée l'un par rapport à l'autre, l'élément de compensation (25) étant de préférence adapté pour compenser la position inclinée entre le corps d'étanchéité (14) et le siège de soupape (21) dans une position de fermeture de la soupape de protection contre les fuites par une déformation localement plus forte.

4. Raccord arrachable selon l'une quelconque des revendications 1 à 3, dans lequel le matériau de l'élément de compensation (25) présente une dureté inférieure à celle du matériau du siège de soupape (21) et à celle du matériau du corps d'étanchéité (14).

5. Raccord arrachable selon l'une quelconque des revendications 1 à 4, dans lequel l'élément de compensation (25) est relié au corps d'étanchéité (14), la liaison s'effectuant de préférence par friction ou par complémentarité de forme ou par liaison de matière.

6. Raccord arrachable selon la revendication 5, dans lequel le corps d'étanchéité (14) présente une rainure périphérique dans la direction circonférentielle dans laquelle est inséré l'élément de compensation (25), le corps d'étanchéité (14) étant de préférence réalisé sous forme élastique, de telle sorte qu'un effet de serrage est exercé sur l'élément de compensation (25) inséré dans la rainure.

7. Raccord arrachable selon l'une quelconque des revendications 1 à 4, dans lequel l'élément de compensation (25) est relié au siège de soupape (21), la liaison s'effectuant de préférence par friction ou par complémentarité de forme ou par liaison de matière, le siège de soupape (21) présentant de préférence une rainure périphérique dans la direction circonférentielle dans laquelle est inséré l'élément de compensation (25), le siège de soupape (21) étant de préférence réalisé sous forme élastique, de telle sorte qu'il exerce un effet de serrage sur l'élément de compensation (25) inséré dans la rainure.

8. Raccord arrachable selon l'une quelconque des revendications 1 à 7, dans lequel l'élément de compensation (25) est constitué d'un matériau dont la dureté est dans la plage comprise entre 25 et 100 Shore A, de préférence dans la plage comprise entre 70 et 95 Shore A et de manière davantage préférée dans la plage comprise entre 75 et 90 Shore A.

9. Raccord arrachable selon l'une quelconque des revendications 1 à 8, dans lequel l'élément de compensation (25) comprend une matière plastique, en particulier un élastomère, ou est formé à partir de celle-ci.

10. Raccord arrachable selon l'une quelconque des revendications 1 à 9, dans lequel le corps d'étanchéité (14) et/ou le siège de soupape (21) comprend une matière plastique ou un métal ou est formé à partir de ceux-ci.

11. Raccord arrachable selon l'une quelconque des revendications 1 à 10, dans lequel le corps d'étanchéité (14) et/ou le siège de soupape (21) présentent, dans la zone de la surface d'appui (24), une profondeur de rugosité moyenne R_{z} selon DIN EN ISO 4287:1984, qui se situe entre 1 µm et 63 µm, de préférence entre 4 µm et 25 µm, de manière davantage préférée entre 4 µm et 10 pm.

12. Raccord arrachable selon l'une quelconque des revendications 1 à 11, dans lequel
a. la soupape de protection contre les fuites (20) est agencée sur la deuxième partie de raccord (4), l'élément de retenue (16) s'appliquant, à l'état assemblé des parties de raccord (3, 4), contre une surface d'appui de la première partie de raccord (3) et maintenant le corps de soupape (14) de la soupape de protection contre les fuites (20) dans une position d'ouverture à l'encontre d'une force de fermeture et/ou
b. la soupape de protection contre les fuites (20) présente un guidage avec jeu pour le corps d'étanchéité (14), qui est réalisé pour permettre, dans la position de fermeture, un écart angulaire d'au moins 0,1° entre une direction axiale du siège de soupape (21) et une direction axiale du corps d'étanchéité (14).

13. Raccord arrachable selon l'une quelconque des revendications 1 à 12, dans lequel l'élément de sécurité (12) présente un anneau de sécurité non symétrique en rotation qui forme une liaison par complémentarité de forme avec la première (3) et la deuxième (4) partie de raccord.

14. Raccord arrachable selon l'une quelconque des revendications 1 à 13, qui présente une bague d'arrêt (5) qui s'engage dans un premier logement de bague d'arrêt de la première partie de raccord (3) et dans un deuxième logement de bague d'arrêt de la deuxième partie de raccord (4) et qui peut être désenclenchée par une force de séparation définie.

15. Raccord arrachable selon l'une quelconque des revendications 1 à 14, dans lequel les parties de raccord (3, 4) peuvent être reliées à au moins une autre paire de conduites de fluide, les parties de raccord (3, 4) présentant au moins une autre soupape de protection contre les fuites qui est associée à l'autre paire de conduites de fluide et qui présente un siège de soupape (21) et un corps d'étanchéité (14) réalisé pour coopérer avec le siège de soupape (21), l'autre soupape de protection contre les fuites (20) comprenant un élément de retenue (16) qui est réalisé pour permettre un passage du fluide à l'état assemblé des parties de raccord (3, 4), l'autre soupape de protection contre les fuites (20) étant réalisée pour empêcher une fuite du fluide à partir d'au moins une des autres conduites de fluide à l'état séparé des parties de raccord (3, 4).
